# EUROPÄISCHE PATENTSCHRIFT

(11) **EP 3 484 408 B1**
(45) Veröffentlichungstag und Bekanntmachung des Hinweises auf die Patenterteilung: **14.12.2022**
(21) Anmeldenummer: 17736675.4
(22) Anmeldetag: 06.07.2017
(51) Int. Cl.: A61C 13/20, F27B 17/02

(54) **DENTAL-BRENNOFEN**
DENTAL FURNACE
FOUR DENTAIRE

(30) Priorität: 12.07.2016 DE 102016008463
(43) Veröffentlichungstag der Anmeldung: 22.05.2019
(73) Patentinhaber: Vita Zahnfabrik H. Rauter GmbH & Co. KG, 79713 Bad Säckingen (DE)
(72) Erfinder: BAHOLZER, Thomas, 79736 Rickenbach/Egg (DE)
(74) Vertreter: dompatent von Kreisler Selting Werner - Partnerschaft von Patent- und Rechtsanwälten mbB
(86) Internationale Anmeldenummer: PCT/EP2017/067007
(87) Internationale Veröffentlichungsnummer: WO 2018/011061

(56) Entgegenhaltungen:
- DE-A1- 2 656 288
- DE-A1-102004 049 888
- DE-U1- 29 905 385
- KR-A- 20150 115 713
- US-B1- 6 441 346

## Beschreibung

Die Erfindung betrifft einen Dental-Brennofen zum Brennen dentalkeramischer Massen sowie zum Aufbrennen dentalkeramischer Massen auf Dental-Legierungen, Zirkonoxyd und/oder anderen keramischen Werkstoffen, in Verbindung mit einem Flüssigstoff (Anmischflüssigkeit).

Bekannte Brennöfen für dentalkeramische Massen weisen, zumindest teilweise, ein evakuierbares Brennkammergehäuse auf. Dieses Brennkammergehäuse ist mit einer thermisch isolierenden Auskleidung versehen. Vor dem Brennen dentalkeramischer Massen ist es bei bekannten Brennöfen erforderlich, diese über einen längeren Zeitraum vorzuheizen um die thermisch isolierende Auskleidung auf Grundtemperatur zu bringen. Ohne dieses Vorheizen sind gleichmäßige Brennergebnisse nicht möglich und auch der vorgegebene Temperaturanstieg pro Zeiteinheit nicht gesichert. Als Heizelemente werden bei bekannten Brennöfen Heizelemente mit Widerstandsdrähten, insbesondere aus Eisen-Chrom-Aluminiumlegierung in einem Quarzrohr eingesetzt. Derartige Widerstandsheizelemente emittieren freiabstrahlend im aktiven glühenden Zustand vorzugsweise Infrarotstrahlung im Wellenlängenbereich von ca. 2 - 5 µm. Die Reaktionszeit derartiger Heizelemente, d.h. die Zeit vom kalten Zustand bis zum Erreichen des Strahlungsmaximum, beträgt mehrere Minuten.

Die von derartigen Widerstandsheizelementen abgegebene Infrarotstrahlung bewirkt eine Erwärmung der Oberfläche der dentalkeramischen Masse. Diese Wärme, auf der Oberfläche der dentalkeramischen Masse, wird entsprechend deren Wärmeleitfähigkeit in tiefere Schichten weitergeleitet.

Ein Vorwärmen ist auch erforderlich, um den in der dentalkeramischen Masse enthaltenen Flüssigstoff auszubringen. Nur durch ein ausreichendes Vorwärmen und ein damit verbundenes Verdampfen des Flüssigstoffes auch aus tieferen Bereichen der dentalkeramischen Masse ist sichergestellt, dass diese beim Brennen nicht abplatzt.

Zum Vorwärmen und Brennen der dentalkeramischen Masse wird diese auf einen Brennträger aufgesetzt. Dieser Brennträger wird auf die thermische Bodenisolation aufgesetzt. Brennträger und die thermische Bodenisolation bilden das Bodenelement.

Vor dem Brennen, zum Vorwärmen und Ausbringen des enthaltenen Flüssigstoffs, ist die Brennkammer offen, d.h. das Bodenelement befindet sich außerhalb der Brennkammer. Dieser Vorwärmeprozess wird durch schrittweises Verschließen der Brennkammer abgeschlossen und der Brennprozess gestartet.

Der Brennprozess wird, je nach Eigenschaft der dentalkeramischen Masse und nach einem vorgegebenen Brennprogramm, mit unterschiedlichen Programmparametern wie Temperatur, Zeit und optional Unterdruck, durchgeführt.

Nach Abschluss des Brennprozesses wird die Brennkammer geöffnet und das fertiggestellte Keramikelement kann entnommen werden. Die Brennkammer kühlt ab und wird bis zum nächsten Brennprozess auf Bereitschaftstemperatur gehalten.

Bekannte Brennöfen weisen daher insbesondere den Nachteil auf, dass diese vorgewärmt werden müssen bzw. auf Betriebstemperatur gehalten werden müssen. Dies hat einen erheblichen Energieverbrauch zur Folge. Auch ist die Zyklusdauer, d. h. die Dauer, vom Vorwärmen bis zum Fertigstellen des zu brennenden Keramikelements, sehr lang.

Des Weiteren besteht bei heutigen dentalkeramischen Massen zur Herstellung von Zahnersatz eine höhere Anforderung an die Brennverfahren, da diese dentalkeramischen Massen sehr kleine Korngrößen (Nanopartikel) aufweisen. Damit sind auch die Ansprüche an das Austreiben des enthaltenen Flüssigstoffs sowie der Luftblasen, gestiegen. Dies ist mit bekannten Brennöfen nur bedingt möglich.

Dentale Brennöfen sind beispielsweise aus US 6 441 346 B1, DE 26 56 288, DE 10 2004 049 888 und DE 299 05 385 bekannt.

Aufgabe der Erfindung ist es einen Dental-Brennofen zum Brennen dentalkeramischer Massen zu schaffen, mit dem der Brennprozess verkürzt und vorzugsweise die Qualität verbessert wird.

Die Lösung der Aufgabe erfolgt erfindungsgemäß durch die Merkmale des Anspruchs 1.

Der erfindungsgemäße Dental-Brennofen zum Brennen dentalkeramischer Massen sowie zum Aufbrennen dentalkeramischer Massen auf Dentallegierungen, Zirkonoxyd und/oder anderen keramischen Werkstoffen, in Verbindung mit einem Flüssigstoff (Anmischflüssigkeit) weist eine Brennkammer, zur Aufnahme zu brennender Keramikelemente auf. Die Brennkammer weist vorzugsweise eine Kammerisolation sowie ein ggf. evakuierbares Gehäuse zur Erzeugung von Unterdruck in der Brennkammer auf. Ferner weist der Brennofen eine Heizeinrichtung zur Vorwärmung des Keramikelements und zum Brennen des Keramikelements auf. Mit Hilfe dieser Heizeinrichtung können vorzugsweise Temperaturen von bis zu 1100 °C erzielt werden. Erfindungsgemäß weist die Heizeinrichtung mindestens ein reaktionsschnelles Heizelement, vorzugsweise zwei oder mehrere reaktionsschnelle Heizelemente auf, die zur Erzeugung von Infrarotstrahlung im Bereich von ca. 0,8 - 5 µm dienen, wobei die Energie der emittierten Strahlung im Wellenlängenbereich unterhalb 2 µm im Vergleich zu derzeit verfügbaren Heizelementen einen signifikant höheren Anteil innerhalb des Emissionsspektrum inne hat. Die Reaktionszeit dieser reaktionsschnellen Heizelemente, d.h. die Zeit vom kalten Zustand bis zum Erreichen des Strahlungsmaximum, beträgt vorzugsweise wenige Sekunden, insbesondere weniger als 10 Sekunden und besonders bevorzugt weniger als 5 Sekunden.

Durch die Verwendung dieser reaktionsschnellen Heizelemente können die Vorwärmzeiten für die zu brennenden Keramikelemente deutlich reduziert werden. Der zusätzliche IR-Strahlungsanteil im Wellenlängenbereich unterhalb von ca. 2 µm hat eine größere Eindringtiefe in die dentalkeramische Masse. Die hierbei entstehende Erwärmung der dentalkeramischen Masse im Inneren bzw. in tieferen Schichten führt dazu, dass der dort vorhandene Flüssigstoff schneller verdampft. Dies erfolgt unmittelbar vor dem Erwärmungs- bzw. Brennvorgangs, so dass die äußere Schicht der dentalkeramischen Masse nicht bereits durch Verschmelzen geschlossen ist und somit der vorhandene Flüssigstoff gut entweichen kann. Somit besteht trotz verkürzter Vorwärmphase keine Gefahr des Abplatzens der Keramik von einer eventuell vorhandenen Trägerstruktur, was typischerweise durch Verdampfen von Flüssigkeit in den tieferen Schichten der Keramik hervorgerufen wird, nachdem die Oberfläche der Keramik bereits geschlossen ist. Durch den erfindungsgemäßen Einsatz dieser reaktionsschnellen Heizelemente im Infrarotbereich von ca. 0,8 - 5 µm können somit deutlich kürzere Brennzeiten erzielt werden. Auch ein Vorwärmen ist für einen deutlich geringeren Zeitraum, erforderlich. Hierdurch wird der Energiebedarf deutlich reduziert.

Insbesondere ist es möglich, ein entsprechendes Keramikelement unmittelbar in der Zahnarztpraxis oder Labors zu brennen. Da der Brennvorgang sehr schnell erfolgt und ein Vorwärmen des Brennofens nicht erforderlich ist, ist es möglich, dass der Patient während des Brennvorgangs wartet und insofern die Anzahl der Termine deutlich reduziert werden kann. Eine deutliche Energieeinsparung wird auch dadurch erzielt, dass der erfindungsgemäße Brennofen nicht kontinuierlich auf Bereitschaftstemperatur (Standby) gehalten werden muss, auch wenn Brennvorgänge nur gelegentlich erfolgen. Vielmehr kann der erfindungsgemäße Brennofen unmittelbar genutzt werden. Dies hat auch zur Folge, dass kein unerwünschtes Erwärmen der Umgebung des Brennofens stattfindet.

Bei der Erfindung sind reaktionsschnelle Heizelemente für die Erzeugung von Infrarotstrahlung im Bereich von 0,8 - 5 µm vorgesehen. Die Reaktionszeit dieser reaktionsschnellen Heizelemente, d.h. die Zeit vom kalten Zustand bis zum Erreichen des Strahlungsmaximum, beträgt vorzugsweise wenige Sekunden, insbesondere weniger als 10 Sekunden und besonders bevorzugt weniger als 5 Sekunden. Die Infrarotstrahlung im Bereich von 0,8 - 5 µm dieser reaktionsschnellen Heizelemente wird durch einen oder mehrere Widerstandsheizleiter, bestehend aus Wolfram und Molybdän oder aus einer Kombination mehrerer genannter Widerstandsheizleiter, ausgebildet als Draht und/oder Drahtwendel und/oder Band, erzeugt. Besonders bevorzugt ist es des Weiteren, dass der oder die Widerstandsheizleiter in je einer gasgefüllten Kammer aus infrarotstrahlungsdurchlässigem, bis mindestens 1100°C hitzebeständigem Material, insbesondere Quarzglas oder anderen geeignete Materialien, angeordnet ist bzw. sind.

In der Brennkammer kann eine Heizeinrichtung mit einem oder mehreren reaktionsschnellen Heizelementen angeordnet sein. Hierbei kann es sich um Heizelemente handeln, die identisch aufgebaut sind uns insofern Infrarotstrahlung im selben Wellenlängenbereich abgeben. Es ist jedoch auch möglich, unterschiedliche Heizelemente vorzusehen, die unterschiedliche Emissionsmaxima aufweisen. Dies kann insbesondere durch Verwendung unterschiedlicher Materialien bzw. Materialzusammensetzungen der Widerstandsheizleiter realisiert werden. Auch können die einzelnen Heizelemente in ihrer Form und/oder Anordnung in der Brennkammer unterschiedlich ausgestaltet sein. Des Weiteren ist es möglich, dass die einzelnen Heizelemente mit Hilfe einer Steuereinrichtung unterschiedlich betrieben werden. Beispielsweise können die einzelnen Heizelemente zu unterschiedlichen Zeiten und/oder mit unterschiedlichen Leistungen gesteuert werden. Dies ist insbesondere in Abhängigkeit des zu brennenden Keramikelements, beispielsweise hinsichtlich des Materials und/oder der Form und/oder der Größe des Keramikelements möglich.

Das mindestens eine reaktionsschnelle Heizelement ist vorzugsweise als langgestreckter Körper ausgebildet.

Zur weiteren Verbesserung der Brennqualität und zur Verringerung der Brennzeiten ist es bevorzugt, dass in der Brennkammer mindestens ein Reflektionselement angeordnet ist. Mittels des Reflektorelements erfolgt ein Lenken der von dem mindestens einen reaktionsschnellen Heizelement abgegebenen Infrarotstrahlung in Richtung des zu brennenden Keramikelements. Bevorzugt ist es hierbei, dass das mindestens eine insbesondere zylindrisch ausgebildete Heizelement zumindest teilweise von dem Reflektorelement umgeben ist. Insbesondere ist das Reflektorelement im Querschnitt möglichst parabelförmig oder annähernd parabelförmig ausgebildet, um ein entsprechendes Reflektieren/Umlenken der von dem mindestens einen reaktionsschnellen Heizelement abgegebenen Strahlung in Richtung des Keramikelements auf effektive Weise zu gewährleisten. Besonders bevorzugt ist es hierbei, dass das mindestens eine Reflektorelement als langgestreckter Körper ausgebildet ist. Dieser Körper erstreckt sich vorzugweise über die gesamte Heizlänge des zugehörigen beispielsweise parabolisch, zylindrisch oder dergleichen ausgebildeten Heizelements. Hierdurch kann die Effektivität des erfindungsgemäßen Dental-Brennofens deutlich erhöht werden.

Des Weiteren ist es bevorzugt, dass das mindestens eine Reflexionselement an einer Innenseite von die Brennkammer ausbildenden Kammerwänden angeordnet ist. Je nach Einbaulage können die Heizelemente und auch die entsprechenden Reflektionselemente insbesondere horizontal oder vertikal ausgerichtet sein. Selbstverständlich sind auch andere Ausrichtungen und Kombinationen unterschiedlicher Ausrichtungen möglich. Die Kammerwände weisen in bevorzugter Weiterbildung der Erfindung eine Wärmeisolation auf.

Bei einer besonders bevorzugten Weiterbildung der Erfindung ist in der Brennkammer ein Aufnahmeelement, wie ein Brenntisch, zur Aufnahme des Keramikelements, vorgesehen. Hierbei ist das Aufnahmeelement aus strahlungsabsorbierendem Material hergestellt bzw. weist strahlungsabsorbierendes Material auf. Insbesondere weist das Aufnahmeelement Material auf, das Infrarotstrahlung größtenteils absorbiert, so dass das Aufnahmeelement insbesondere in Verbindung mit dem oder den reaktionsschnellen aktiven Heizelement(en) als zusätzliches (passives) Heizelement dient. Das Keramikelement wird durch dieses passive Heizelement zusätzlich von unten durch Wärmestrahlung und von Innen durch Wärmeleitung beheizt. Dies bedeutet eine gleichmäßige Verteilung der Wärme auf das gesamte Keramikelement mit Verbesserung der Qualität sowie die Verkürzung der Brennzeit und damit wiederum Einsparung von Energie. Besonders bevorzugt ist es, dass das Aufnahmeelement zur besseren Strahlungsabsorption und somit schnellen Erwärmung aus einem dunklen, insbesondere schwarzen Material hergestellt ist. Besonders bevorzugt ist die Verwendung von Siliciumcarbit, wobei das Aufnahmeelement bevorzugt Siliciumcarbit aufweist, insbesondere aus Siliciumcarbit hergestellt ist.

Um eine Wärmeableitung von dem Aufnahmeelement in eine Kammerwand, in einen Kammerboden oder dergleichen zu vermeiden, weist das Aufnahmeelement zur Isolierung vorzugsweise Abstandshalter auf, so dass die Berührungsfläche zwischen dem Aufnahmeelement und dem entsprechenden Kammerboden möglichst klein ist.

Des Weiteren ist in der Brennkammer vorzugsweise eine Temperaturmesseinrichtung angeordnet. Die Temperaturmesseinrichtung ist hierbei insbesondere nicht im oberen Bereich oder einem Randbereich der Brennkammer, sondern nahe des zu brennenden Keramikelements angeordnet. Als Temperaturmesseinrichtung wird vorzugsweise eine üblicherweise in Dental-Brennöfen eingesetzte Temperaturmesseinrichtung verwendet.

Die erfindungsgemäße Verwendung der schnellen Infrarot-Heizelemente im Bereich von ca. 0,8 - 5 µm hat nicht nur den Vorteil, dass die IR-Strahlung tief in das zu brennende Keramikelement eindringt und hier eine gute Trocknung bewirkt, sondern dass auch ein schnelles gleichmäßiges Brennen des Keramikelements erfolgt. Insbesondere ist mit dem erfindungsgemäßen Brennofen kein oder nur ein geringes Vorwärmen erforderlich. Auch die Abkühlzeiten sind erheblich kürzer als bei bekannten Brennöfen, so dass der Brennofen nach kurzer Zeit für den nächsten Brennvorgang bereit ist.

Des Weiteren ergeben sich durch die Verwendung der schnellen Infrarot-Heizelemente im Bereich von ca. 0,8 - 5 µm nicht nur kürzere Prozesszeiten, sondern auch sehr konstante gleichmäßige und qualitativ hochwertige Brennergebnisse. Es ist auch eine exaktere Steuerung des Brennverlaufs möglich. Dies ist insbesondere bei der Verwendung moderner Materialien mit sehr kleinen gleichmäßigen Korngrößen (Nano-Partikeln) vorteilhaft.

Nachfolgend wird die Erfindung anhand einer bevorzugten Ausführungsform und in Bezugnahme auf die anliegende Zeichnung näher erläutert.

Es zeigt:

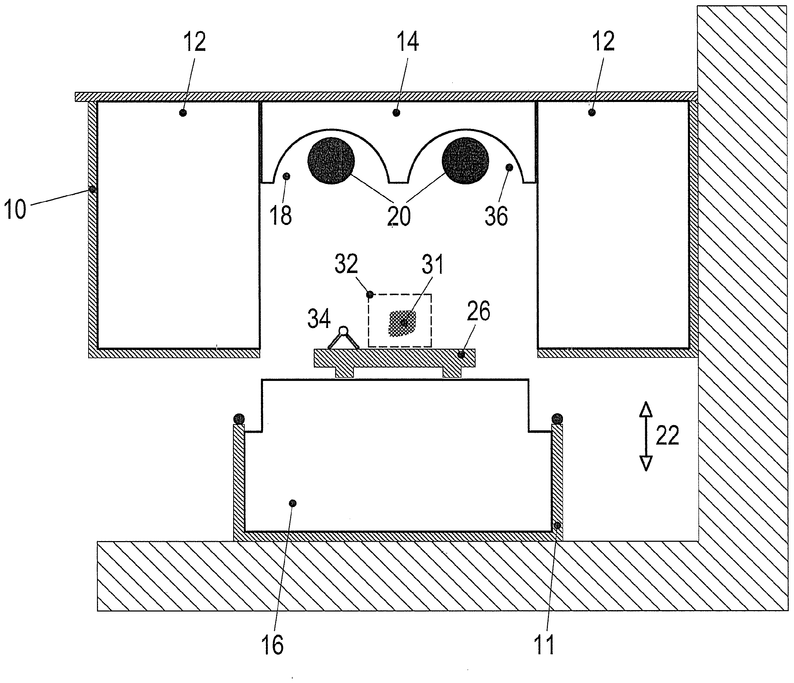

- Fig. 1: eine schematische Schnittansicht eines erfindungsgemäßen Dental-Brennofens.

Der dargestellte, schematisch stark vereinfachte Brennofen weist eine Brennkammer auf. Diese ist von thermisch isolierten Kammerwänden, Seitenwand 12, Decke 14 und Boden 16 ausgebildet. Die thermisch isolierte Decke 14 weist in Längsrichtung, d. h. senkrecht zur Zeichenebene, zwei parabolische Ausnehmungen 18 auf. In diesen Ausnehmungen ist jeweils ein zylindrisch ausgebildetes, sich ebenfalls in Längsrichtung senkrecht zur Zeichenebene erstreckendes Heizelement 20 angeordnet. Die Heizeinrichtung kann jeweils mehrere Heizelemente 20 umfassen. Insbesondere ist je Heizelement 20 mindestens ein IR-Strahler vorgesehen. Je nach Einbaulage kann die Ausrichtung der Heizelemente 20 beispielsweise auch horizontal, schräg oder dergleichen sein.

Der Gehäuseboden 11 bzw. die Brennkammer sind zum Öffnen und Schließen der Brennkammer vertikal in Richtung eines Pfeils 22 relativ zueinander verschiebbar. Der Gehäuseboden 11 weist einen Isolationskörper 16 auf, der in geschlossenem Zustand eines Seitenwand bzw. eine Bodenwand der Brennkammer ausbildet. Auf dem Isolationselement 24 ist ein Aufnahmeelement 26 angeordnet. Dieses ist aus dunklem, im IR-Bereich gut absorbierendem Material, insbesondere Siliciumcarbit, hergestellt. Das Aufnahmeelement 26 weist Abstandshalter bzw. Füße 28 auf, so dass das Aufnahmeelement 26 gegenüber dem Isolationselement 16 isoliert ist und nur eine geringe Wärmeübertragung stattfindet. Auf einer Oberseite 30 des tischartigen Aufnahmeelements 26 ist ein zu erwärmendes bzw. zu brennendes Keramikelement 31, wie ein Zahnersatz, angeordnet. Des Weiteren ist im Bereich des Keramikelements 31 eine insbesondere mit einer Brennofensteuerung verbundene Temperaturmesseinrichtung 34 angeordnet.

Weiterhin sind an einer bezogen auf das Brennelement abgewandten Seite der Heizelemente 20 in den halbzylindrischen Ausnehmungen 18 Reflexionselemente 36 angeordnet. Mit Hilfe der Reflexionselemente 36 erfolgt ein Lenken der von den Heizelementen seitlich und nach oben abgegebenen IR-Strahlung in Richtung des Keramikelements 32.

Für die Seitenwände 12 sowie für das Deckenelement 14 ist ferner Material zur Wärmeisolation vorgesehen.

Zum Brennen des Keramikelements 32 wird dieses auf dem Aufnahmeelement 26 angeordnet und der Brennofen durch Verschieben des Gehäusebodens 11 zusammen mit der Thermischen Isolation 16 in Richtung des Pfeils 22 geschlossen. Anschließend erfolgt mit Hilfe der Steuerung ein entsprechendes Regeln der Heizelemente 20, so dass durch die Verwendung der IR-Strahler ein gleichmäßiges Erwärmen und Brennen des Keramikelements 31 erfolgt.

## Patentansprüche

1. Dental-Brennofen zum Brennen dentalkeramischer Massen, mit
einer Brennkammer (10) zur Aufnahme zu brennender Keramikelemente (32) und
einer Heizeinrichtung zum Erwärmen/Brennen des Keramikelements (32),
**dadurch gekennzeichnet, dass**
die Heizeinrichtung mindestens ein reaktionsschnelles Heizelement (20) zur Erzeugung von Infrarotstrahlung im Bereich von 0,8 - 5 µm aufweist,
wobei das mindestens eine Heizelement (20) einen oder mehrere Widerstandsheizleiter, bestehend aus Wolfram und Molybdän, aufweist und der oder die Widerstandsheizleiter in je einer gasgefüllten Kammer aus infrarotstrahlungsdurchlässigem, bis mindestens 1100° C hitzebeständigem Material angeordnet ist bzw. sind.

2. Dental-Brennofen nach Anspruch 1, **dadurch gekennzeichnet, dass** reaktionsschnelle Heizelemente (20) für die Erzeugung der Infrarotstrahlung vorgesehen sind.

3. Dental-Brennofen nach einem der Ansprüche 1 oder 2, **dadurch gekennzeichnet, dass** das mindestens ein reaktionsschnelles Heizelement (20) für die Brennkammer vorgesehen sind.

4. Dental-Brennofen nach einem der Ansprüche 1 - 3, **dadurch gekennzeichnet, dass** die Erwärmung des Heizelements vom kalten Zustand bis zum Erreichen des Strahlungsmaximums in weniger als 10 Sekunden, vorzugsweise in weniger als 5 Sekunden erfolgt.

5. Dental-Brennofen nach einem der Ansprüche 1 - 4, **dadurch gekennzeichnet, dass** das mindestens eine reaktionsschnelle Heizelement und vorzugsweise die zugehörige Kammer, als langgestreckter, oder gekrümmter Körper ausgebildet ist.

6. Dental-Brennofen nach einem der Ansprüche 1 - 5, **dadurch gekennzeichnet, dass** in der Brennkammer mindestens ein Reflexionselement (36) angeordnet ist, um die von dem mindestens einen reaktionsschnellen Heizelement (20) abgegebene Strahlung in Richtung des Keramikelements (32) zu lenken.

7. Dental-Brennofen nach Anspruch 6, **dadurch gekennzeichnet, dass** das mindestens eine reaktionsschnelle Heizelement (20) teilweise von dem Reflektorelement (36) umgeben ist.

8. Dental-Brennofen nach Anspruch 6 oder 7, **dadurch gekennzeichnet, dass** das Reflektorelement (36) im Querschnitt parabelförmig ausgebildet ist.

9. Dental-Brennofen nach einem der Ansprüche 6 - 8, **dadurch gekennzeichnet, dass** das Reflexionselement (36) als langgestreckter Körper, insbesondere teilzylindrisch ausgebildet ist, der sich vorzugsweise über die gesamte Heizlänge eines zugehörigen Heizelements (20) erstreckt.

10. Dental-Brennofen nach einem der Ansprüche 1 - 9, **dadurch gekennzeichnet, dass** das mindestens eine Reflexionselement (36) an einer Innenseite von die Brennkammer (10) ausbildenden Kammerwänden (12, 14, 16) angeordnet ist.

11. Dental-Brennofen nach einem der Ansprüche 1 - 10, **dadurch gekennzeichnet, dass** die die Brennkammer (10) ausbildenden Kammerwände (12, 14, 16) eine Wärmeisolation aufweisen.

12. Dental-Brennofen nach einem der Ansprüche 1 - 11, **gekennzeichnet durch** ein in der Brennkammer angeordnetes Aufnahmeelement (26) zur Aufnahme des Keramikelements (32), wobei das Aufnahmeelement (26) strahlungsabsorbierendes Material aufweist, das insbesondere Infrarotstrahlung absorbiert, so dass das Aufnahmeelement (26) als zusätzliches Heizelement dient.

13. Dental-Brennofen nach einem der Ansprüche 1 - 12, **dadurch gekennzeichnet, dass** das Aufnahmeelement (26) gegenüber Kammerwänden (12) isoliert, insbesondere in einem Abstand angeordnet ist.

14. Dental-Brennofen nach einem der Ansprüche 1 - 13, **dadurch gekennzeichnet, dass** eine Temperaturmesseinrichtung (34) in der Brennkammer (10) nahe dem zu brennenden Keramikelement vorgesehen ist.

15. Dental-Brennofen nach einem der Ansprüche 1-14, **dadurch gekennzeichnet, dass** das hitzebeständige Material der Kammer Quarzglas ist.

## Claims

1. A dental furnace for firing dental-ceramic compounds, comprising
a firing chamber (10) for receiving ceramic elements (32) to be fired, and
a heating device for heating/firing said ceramic element (32),
**characterized in that**
said heating device comprises at least one quick-response heating element (20) for producing IR radiation in the range of 0.8 - 5 µm,
wherein the at least one heating element has one or several resistance heating conductors consisting of tungsten and molybdenum, and the resistance heating conductor(s) is/are each arranged in a gas-filled chamber made of material permeable to infrared radiation and heat-resistant up to at least 1100 °C.

2. The dental furnace according to claim 1, **characterized in that** quick-response heating elements (20) are provided for the generation of the infrared radiation.

3. The dental furnace according to any one of claims 1 or 2, **characterized in that** the at least one quick-response heating element (20) is provided for the firing chamber.

4. The dental furnace according to any one of claims 1-3, **characterized in that** the heating of the heating element from the cold condition up to reaching the radiation peak takes place in less than 10 seconds, preferably in less than 5 seconds.

5. The dental furnace according to any one of claims 1-4, **characterized in that** the at least one quick-response heating element and preferably the associated chamber are configured as an elongate or curved body.

6. The dental furnace according to any one of claims 1-5, **characterized in that** in the firing chamber at least one reflection element (36) is arranged for directing the radiation emitted by the at least one quick-response heating element (20) towards the ceramic element (32).

7. The dental furnace according to claim 6, **characterized in that** the at least one quick-response heating element (20) is partially surrounded by the reflector element (36).

8. The dental furnace according to claim 6 or 7, **characterized in that** the reflector element (36) is parabolic as seen in cross-section.

9. The dental furnace according to any one of claims 6-8, **characterized in that** the reflection element (36) is configured as an elongate, in particular partially cylindrical body which preferably extends over the overall heating length of an associated heating element (20).

10. The dental furnace according to any one of claims 1-9, **characterized in that** the at least one reflection element (36) is arranged on an inner surface of chamber walls (12, 14, 16) defining the firing chamber (10).

11. The dental furnace according to any one of claims 1-10, **characterized in that** the chamber walls (12, 14, 16) defining the firing chamber (10) comprise a heat insulation.

12. The dental furnace according to any one of claims 1-11, **characterized by** a receiving element (26) arranged in the firing chamber for receiving the ceramic element (32), wherein said receiving element (26) comprises a radiation-absorbing material which in particular absorbs infrared radiation such that said receiving element (26) serves as an additional heating element.

13. The dental furnace according to any one of claims 1-12, **characterized in that** the receiving element (26) is insulated from chamber walls (12), in particular arranged at a distance thereto.

14. The dental furnace according to any one of claims 1-13, **characterized in that** a temperature measuring device (34) is provided in the firing chamber (10) in the vicinity of the ceramic element to be fired.

15. The dental furnace according to any one of claims 1-14, **characterized in that** the heat-resistant material of the chamber is quartz glass.

## Revendications

1. Four dentaire de cuisson pour la cuisson de matières dentaires en céramique, avec
une chambre de cuisson (10) destinée à recevoir des éléments en céramique (32) à cuire, et
un dispositif chauffant pour chauffer/cuire l'élément en céramique (32),
**caractérisé en ce que**
le dispositif chauffant présente au moins un élément chauffant (20) à réaction rapide pour produire un rayonnement infrarouge dans la plage de 0,8 - 5 µm,
dans lequel l'au moins un élément chauffant (20) présente un ou plusieurs conducteurs résistants chauffants constitués de tungstène et de molybdène et le ou les conducteurs résistants chauffants est ou sont disposés dans respectivement une chambre remplie de gaz, constituée d'un matériau laissant passer le rayonnement infrarouge, résistant à la chaleur jusqu'à au moins 1100 °C.

2. Four dentaire de cuisson selon la revendication 1, **caractérisé en ce que** des éléments chauffants (20) réactifs sont prévus pour la production du rayonnement infrarouge.

3. Four dentaire de cuisson selon l'une quelconque des revendications 1 ou 2, **caractérisé en ce que** l'au moins un élément chauffant (20) réactif est prévu pour la chambre de cuisson.

4. Four dentaire de cuisson selon l'une quelconque des revendications 1 à 3, **caractérisé en ce que** le chauffage de l'élément chauffant depuis l'état froid jusqu'à atteindre le rayonnement maximal est effectué en moins de 10 secondes, de préférence en moins de 5 secondes.

5. Four dentaire de cuisson selon l'une quelconque des revendications 1 à 4, **caractérisé en ce que** l'au moins un élément chauffant réactif et de préférence la chambre associée sont réalisés en tant que corps étirés en longueur ou incurvés.

6. Four dentaire de cuisson selon l'une quelconque des revendications 1 à 5, **caractérisé en ce qu'**est disposé dans la chambre de cuisson au moins un élément réfléchissant (36) pour diriger le rayonnement émis par l'au moins un élément chauffant (20) réactif en direction de l'élément en céramique (32).

7. Four dentaire de cuisson selon la revendication 6, **caractérisé en ce que** l'au moins un élément chauffant (20) réactif est entouré en partie de l'élément réflecteur (36).

8. Four dentaire de cuisson selon la revendication 6 ou 7, **caractérisé en ce que** l'élément réflecteur (36) est réalisé en forme de parabole dans la section transversale.

9. Four dentaire de cuisson selon l'une quelconque des revendications 6 à 8, **caractérisé en ce que** l'élément réfléchissant (36) est réalisé en tant que corps étiré en longueur, en particulier de manière partiellement cylindrique, qui s'étend de préférence sur la totalité de la longueur de chauffage de l'élément chauffant (20) associé.

10. Four dentaire de cuisson selon l'une quelconque des revendications 1 à 9, **caractérisé en ce que** l'au moins un élément réfléchissant (36) est disposé sur un côté intérieur de parois de chambre (12, 14, 16) formant la chambre de cuisson (10).

11. Four dentaire de cuisson selon l'une quelconque des revendications 1 à 10, **caractérisé en ce que** les parois de chambre (12, 14, 16) formant la chambre de cuisson (10) présentent une isolation thermique.

12. Four dentaire de cuisson selon l'une quelconque des revendications 1 à 11, **caractérisé par** un élément de réception (26) disposé dans la chambre de cuisson, destiné à recevoir l'élément en céramique (32), dans lequel l'élément de réception (26) présente du matériau d'absorption de rayonnement, qui absorbe en particulier du rayonnement infrarouge de telle sorte que l'élément de réception (26) sert d'élément chauffant supplémentaire.

13. Four dentaire de cuisson selon l'une quelconque des revendications 1 à 12, **caractérisé en ce que** l'élément de réception (26) est isole par rapport à des parois de chambre (12), en particulier à une distance donnée.

14. Four dentaire de cuisson selon l'une quelconque des revendications 1 à 13, **caractérisé en ce qu'**un dispositif de mesure de température (34) est prévu dans la chambre de cuisson (10) à proximité de l'élément en céramique à cuire.

15. Four dentaire de cuisson selon l'une quelconque des revendications 1 à 14, **caractérisé en ce que** le matériau résistant à la chaleur de la chambre est du verre de quartz.
